# EUROPÄISCHE PATENTANMELDUNG

(11) **EP 2 587 108 A2**
(43) Veröffentlichungstag der Anmeldung: **01.05.2013**
(21) Anmeldenummer: 12190242.3
(22) Anmeldetag: 26.10.2012
(51) Int. Cl.: F16L 33/26

(54) **Verfahren und Anordnung zum Anschließen eines flexiblen Leitungselements aus Metall**

(30) Priorität: 28.10.2011 DE 102011117137
(71) Anmelder: Witzenmann GmbH, 75175 Pforzheim (DE)
(72) Erfinder: Ferber, Daniel, 75447 Sternenfels (DE); Hornung, Jörg, 75248 Ölbronn-Dürrn (DE); Tubach, Hans, 75334 Straubenhardt (DE)
(74) Vertreter: Kaiser, Magnus

(57) **Zusammenfassung**

Die vorliegende Erfindung betrifft ein Verfahren und eine Anordnung zum Anschließen eines flexiblen Leitungselements (1, 13) aus Metall an ein medienführendes, starres Bauteil (4, 14) mit einem Rohrstutzen (3), auf den das flexible Leitungselement (1) gesetzt wird, wobei ein medienführendes, starres Bauteil (4) mit einem sich zum flexiblen Leitungselement hin verjüngenden Rohrstutzen (3) verwendet wird, dessen Außendurchmesser zumindest zum Teil größer als die lichte Weite eines Anschlussendes (2) des flexiblen Leitungselements (1) ist und wobei das flexible Leitungselement mit seinem Anschlussende (2) auf dem Rohrstutzen (3) verpresst wird bzw. ist.

## Beschreibung

Die Erfindung betrifft ein Verfahren zum Anschließen eines flexiblen Leitungselements aus Metall an ein medienführendes starres Bauteil sowie eine entsprechende Anordnung. Das anzuschließende flexible Leitungselement verfügt hierbei über ein Anschlussende, das auf einen Rohrstutzen des medienführenden, starren Bauteils aufgesetzt und dort festgelegt wird.

Ein flexibles Leitungselement und ein starres Bauteil der vorliegenden Art, die miteinander verbunden werden sollen, dienen zum Führen eines Mediums, das flüssig und/oder gasförmig sein kann, das jedoch auch aus Feststoffen, beispielsweise aus einem Partikelstrom bestehen kann. Das flexible Leitungselement ist beispielsweise ein Metallschlauch oder ein Metallbalg oder ein aus entsprechenden Bauteilen bestehendes Leitungsteil, wie beispielsweise ein Kompensator, ein Entkoppelelement etc.

Ein bevorzugtes Anwendungsgebiet der vorliegenden Erfindung ist der Fahrzeugbau, wo flexible Leitungselemente aus Metall beispielsweise in der Abgasanlage als Entkoppelelement, als Körperschallentkoppelelement oder als Kompensator verwendet werden. Mit flexiblen Leitungselementen aus Metall werden außerdem im Fahrzeugbau beispielsweise Abgase, Kühlmittel, Ladeluft, Öl oder Kältemittel für die Klimaanlage transportiert. Das medienführende starre Bauteil, an das das flexible Leitungselement angeschlossen werden soll, kann in diesen Fällen und im bevorzugte Anwendungsgebiet ein Abgasrohr, ein Abgaskrümmer, ein Motorblock, ein Abgasturbolader, ein Ventil oder ein Kühler sein. Das Einsatzgebiet der vorliegenden Erfindung ist jedoch nicht auf den Fahrzeugbau beschränkt.

Die Aufgabe, ein flexibles Leitungselement an ein medienführendes starres Bauteil anzuschließen, und zwar fluiddicht und dauerhaft, wird im Stand der Technik üblicherweise mittels einer stoffschlüssigen Verbindung, insbesondere einer Schweißverbindung gelöst, soweit die Verbindung unlösbar sein soll, oder aber durch eine Klemmverbindung mittels Rohrschellen oder eine formschlüssige Verbindung über Flansche, soweit die Verbindung lösbar ausgestaltet sein soll.

Stoffschlüssige Verbindungen sind in der Regel dauerhaft und fluiddicht, jedoch können sie nicht mehr ohne weiteres gelöst werden, was insbesondere im Fahrzeugbau hinsichtlich der geforderten Recyclingfähigkeit der verbauten Rohstoffe nachteilig sein kann. Außerdem lassen sich nicht alle Materialpaarungen schweißen, und Klebverbindungen sind für den Fahrzeugbau meist nicht beständig genug. Verbindungstechniken zum stoffschlüssigen Verbinden, wie Schweißen und Löten, sind darüber hinaus aufwendig und bei beengten Platzverhältnissen oft nur unter großen Schwierigkeiten durchführbar.

Herkömmliche Klemmverbindungen mittels Rohrschellen sind hinsichtlich ihrer Dichtheit sowie ihrer Langzeitbeständigkeit oft problematisch. Ferner wird für die Schellen Bauraum benötigt, der nicht in allen Einbausituationen zur Verfügung steht. Auch das Verhalten einer solchen Klemmverbindung unter thermischer Belastung ist oft problematisch.

Flanschverbindungen sind zwar beständig und dauerhaft dicht, jedoch aufwändig in der Herstellung und Handhabung.

Der vorliegenden Erfindung liegt daher die Aufgabe zugrunde, ein Verfahren und eine Anordnung der eingangs genannten Art vorzuschlagen, mit dem bzw. mit der ein flexibles Leitungselement aus Metall langzeitbeständig, dicht und einfacher als im Stand der Technik an ein medienführendes starres Bauteil angeschlossen werden kann.

Gelöst ist diese Aufgabe durch ein Verfahren mit den Merkmalen des Anspruchs 1 sowie durch eine Anordnung mit den Merkmalen des Anspruchs 10. Bevorzugte Weiterbildungen des erfindungsgemäßen Verfahrens finden sich in den Ansprüchen 2 bis 9; bevorzugte Ausgestaltungen der erfindungsgemäßen Anordnung sind in den Ansprüchen 11 bis 18 niedergelegt.

Gemäß einem ersten Aspekt der vorliegenden Erfindung wird also ein medienführendes starres Bauteil verwendet, dessen Rohrstutzen sich zum flexiblen Leitungselement hin verjüngt und dessen Außendurchmesser zumindest zum Teil größer als die lichte Weite des Anschlussendes des flexiblen Leitungselements ist. Nach dem Aufsetzen des Anschlussendes auf den sich verjüngenden Rohrstutzen wird das Anschlussende auf dem Rohrstutzen verpresst, so dass sich eine umlaufende, radial dichtende, reibschlüssige Verbindung zwischen dem starren Bauteil und dem flexiblen Leitungselement ergibt. Die Verjüngung des Rohrstutzens zum flexiblen Leitungselement hin ermöglicht hierbei, dass die beiden Bauteile leicht und unkompliziert zusammengefügt werden können, da hierzu in der Regel eine axiale Relativbewegung ausreicht. Selbst für die erfindungsgemäße Verpressung des Anschlussendes des flexiblen Leitungselements auf dem Rohrstutzen des starren Bauteiles reicht oft die axiale Fügebewegung der beiden Bauteile zueinander hin aus, da das Anschlussende des flexiblen Leitungselements auf die sich verjüngende Außenfläche des Rohrstutzens des starren Bauteils aufläuft und hierbei eine gewisse Aufweitung erfährt, die ihrerseits die Normalkraft zwischen der Innenfläche des Anschlussendes und der Außenfläche des Rohrstutzens erhöht und die reibschlüssige Verbindung sichert. Alternativ oder zusätzlich kann im Rahmen der vorliegenden Erfindung auch ein Verpresswerkzeug zum Einsatz kommen.

Durch geeignete Materialwahl kann ein Wärmeausdehnungseffekt bei thermischer Belastung, wie sie beispielsweise in oder in der Nähe von Abgasanlagen von Verbrennungsmotoren auftritt, die Normalkraft zwischen dem Anschlussende des flexiblen Leitungselements und dem Rohrstutzen des starren Bauteils noch erhöhen und damit den Reibschluss verbessern. Beispielsweise kann das Anschlussende des flexiblen Leitungselements aus einer Metalllegierung bestehen, die sich bei einer Erwärmung der Anordnung weniger ausdehnt als der Rohrstutzen des medienführenden starren Bauteils. Je mehr sich die Anordnung erwärmt, umso höher ist dann die Normalkraft zwischen den beiden reibschlüssig aneinander festgelegten Bauteilen. Wenn umgekehrt kalte Medien durch die Anordnung geleitet werden sollen, kann es sinnvoll sein, den umgekehrten Weg zu beschreiten und das Anschlussende des flexiblen Leitungselements aus einer Metalllegierung herzustellen, die sich bei zunehmender Kälte mehr zusammenzieht als der Rohrstutzen des medienführenden starren Bauteils. Zweckmäßigerweise passt man für den jeweiligen Anwendungsbereich die Materialwahl an den Temperaturbereich des durchgeleiteten Mediums und der Umgebung an.

Zu diesem Zweck können im Rahmen der vorliegenden Erfindung Legierungen verwendet werden, deren Wärmeausdehnungskoeffizient einen Wert nahe Null oder gar einen negativen Wert besitzt. Solche Legierungen sind beispielsweise Eisen-Nickel-Legierungen, insbesondere mit der Werkstoffnummer 1.3912 (bekannt unter der eingetragenen Marke Invar) mit ca. 64 % Eisen und ca. 36 % Nickel, oder eine Eisen-Mangan-Legierung, eine Chrom-Eisen-Legierung, eine Chrom- Mangan-Legierung, eine Kobalt-Chrom-Legierung etc.

Das Beaufschlagen des flexiblen Leitungselements mit Innendruck, wie dies beispielsweise bei Anwendungen in Klimaanlagen von Fahrzeugen der Fall ist, kann die Verpressung stabilisieren, indem die Normalkraft zwischen den Bauteilen erhöht wird; dies ist insbesondere dann der Fall, wenn das flexible Leitungselement aus einem Wellschlauch besteht: Dieser längt sich bei herrschendem Innendruck, so dass sein Anschlussende axial weiter zum starren Bauteil hin bewegt wird und sich damit die Verpressungskräfte und der Reibschluss zum konisch ausgebildeten Anschlussstutzen erhöhen.

Durch die erfindungsgemäße Verpressung des Anschlussendes des flexiblen Leitungselements auf dem Rohrstutzen des starren Bauteils ist nicht nur eine umlaufende Dichtung der Verbindung gewährleistet, sondern auch eine mechanische Haltekraft der beiden Bauteile aneinander. Um die Ausziehfestigkeit dieser beiden Bauteile zu erhöhen, kann es im Rahmen der vorliegenden Erfindung vorgesehen sein, ein medienführendes starres Bauteil mit einem Rohrstutzen zu verwenden, dessen Außenkontur Hinterscheidungen aufweist, wobei sich dies auf die Projektion des starren Bauteils aus Richtung des flexiblen Leitungselements bezieht. Das Anschlussende des flexiblen Leitungselements kann dann so umgeformt werden, dass es die Hinterschneidung hintergreift und so die gewünschte Ausziehsicherung bildet. Das Hintergreifen der Hinterschneidung erfolgt vorzugsweise durch Einformen des Anschlussendes in die Außenkontur des Rohrstutzens. Bei dieser bevorzugten Ausführung der Erfindung wird die reibschlüssige Verbindung, die letztlich für die Fluiddichtheit sorgt, mit einer formschlüssigen Verbindung, nämlich dem Hintergreifen einer Hinterschneidung, kombiniert.

Sowohl das Umformen des Anschlussendes des flexiblen Leitungselements zum Hintegreifen einer Hinterschneidung oder zum Einformen in eine Außenkontur des Rohrstutzens als auch das Verpressen kann durch Magnetumformen erfolgen. Hierbei macht man sich zunutze, dass stromdurchflossene Leiter in einem Magnetfeld eine senkrecht zur Stromflussrichtung orientierte Kraft erfahren. Ferner wird die Tatsache genutzt, dass ein zeitlich veränderliches Magnetfeld in Leitern Ströme induziert. Wird ein Rohr aus einem stromleitenden Material (berührungslos) mit einer Spule umgeben und die Spule mit Strompulsen beaufschlagt, wird im Rohr zu jedem Strompuls ein entgegengerichteter Strom induziert, wobei die durch die Strompulse und induzierten Ströme hervorgerufenen Magnetfelder die Spule zu expandieren und das Rohr zu komprimieren versuchen. Wechselt der Spulenstrom seine Richtung, baut sich im Rohr wiederum ein gegenläufiger Stromfluss auf, wobei die auf die beiden Bauteile einwirkenden Lorenzkräfte in ihrer Richtung bestehen bleiben. Soweit die Spule mechanisch genügend stabil aufgebaut ist, führt ein starker gepulster Wechselstrom durch die Spule im Ergebnis zu einem Komprimieren des Anschlussendes des flexiblen Leitungselements mittels berührungsloser Kaltumformung.

Zur Erzielung der erfindungsgemäßen Wirkungen und Vorteile hat es sich als zweckmäßig herausgestellt, wenn der sich verjüngende Rohrstutzen des medienführenden starren Bauteils einen Öffnungswinkel von > 0° bis ca. 15° besitzt, wobei der Öffnungswinkel einer Kegelfläche gemeint ist, die entweder der Außenfläche des Rohrstutzens entspricht oder aber eine gemittelte, "best fit"-Näherungs-Kegelfläche einer nicht kegelstumpfförmig ausgebildeten Außenfläche des Rohrstutzens ist.

Als weitere Ausziehsicherung sowie zur Stabilisierung der Verpressung kann alternativ oder zusätzlich im Rahmen der vorliegenden Erfindung ein Halteelement zum Einsatz kommen, das zusätzlich von außen gegen das Anschlussende des flexiblen Leitungsteils drückt und dieses zusätzlich gegen den Rohrstutzen des medienführenden starren Bauteils verpresst. Auch ein solches Halteelement kann solcherart gewählt werden, dass dessen Wärmeausdehnungskoeffizient von demjenigen der anderen Bauteile verschieden ist. Bei entsprechender thermischer Belastung der Bauteile kann dies eine verstärkte Verpressung bewirken.

Nach einem zweiten Aspekt der vorliegenden Erfindung besteht der Rohrstutzen des starren Bauteils aus mindestens zwei koaxial gegeneinander bewegbaren, durch eine im Wesentlichen axial verlaufende Trennfläche getrennten Rohrstutzenteilen, und das Anschlussende des flexiblen Leitungsteils wird auf den äußeren Rohrstutzenteil gesetzt und zusammen mit diesem auf den mit dem starren Bauteil fest verbundenen, inneren Rohrstutzenteil aufgeschoben. Bei diesem zweiten Aspekt der vorliegenden Erfindung ist es nicht notwendig, dass sich der Rohrstutzen zum flexiblen Leitungselement hin verjüngt; es kann vielmehr auch ein zylindrischer oder anders geformter Rohrstutzen mit im Wesentlichen axial verlaufenden Flächen verwendet werden.

Vorzugsweise sind die beiden koaxial gegeneinander bewegbaren Rohrstutzenteile zu ihrer Trennfläche hin mit einer makrorauhen Oberfläche versehen, d.h. sie weisen keine ebenen, sondern beispielsweise leicht gewellte Flächen auf, wobei die makrorauhen Profile der beiden Rohrstutzenteile einander entsprechen können, so dass sie im zusammengebauten Zustand überall aneinanderliegen, dies jedoch nicht so sein muss. Die durch die Makrorauhigkeiten hervorgerufenen Verhakungen der beiden Rohrstutzenteile führt zu einem insgesamt besseren Reibschluss.

Bei diesem zweiten Aspekt der vorliegenden Erfindung kann das eigentliche Anschlussende des flexiblen Leitungselements durchaus stoffschlüssig mit dem äußeren Rohrstutzenteil verbunden sein, beispielsweise mittels einer Schweißung, so dass die erfindungsgemäße Verpressung zwischen den beiden Rohrstutzenteilen an deren Trennfläche entsteht. Durch die Teilung des Rohrstutzens ist es dann auch möglich, den inneren und den äußeren Rohrstutzenteil aus verschiedenen Materialien zu fertigen, so dass beispielsweise der äußere Rohrstutzenteil aus einem mit dem Material des flexiblen Leitungselements schweißbaren Material bestehen kann, während der innere Rohrstutzenteil aus dem Material des starren Bauteils oder beispielsweise einem besonders elastischen Material bestehen kann, um ein axiales Aufschieben des äußeren Rohrstutzenteils zu erleichtern und dennoch einen beständigen und dichten Reibschluss herstellen zu können.

Auch im Rahmen dieses zweiten Aspekts der vorliegenden Erfindung kann es sehr vorteilhaft sein, die Materialien der beiden reibschlüssig aneinander festgelegten Rohrstutzenteile so zu wählen, dass sich die Normalkraft zwischen den beiden Rohrstutzenteilen bei anwendungsspezifischer thermischer Belastung (Erwärmung oder Abkühlung) aufgrund unterschiedlicher Wärmeausdehnungskoeffizienten der Materialien erhöht. Bei durchzuleitenden Medien, die gegenüber der Umgebungstemperatur erhöhte Temperaturen aufweisen, wie beispielsweise bei einer Anwendung in der Abgasanlage eines Kraftfahrzeugs, können für den inneren Rohrstutzenteil beispielsweise Gussmaterialien und für den äußeren Rohrstutzenteil Materialien mit den Werkstoffnummern 1.3912 (bekannt unter eingetragenen der Marke Invar), 1.4301 oder GGG SiMo verwendet werden. Diese Materialien sind vorteilhafterweise kombinierbar mit Materialien für das flexible Leitungselement mit beispielsweise den Werkstoffnummern 1.4571, 1.4541 und 2.4856.

Im Rahmen der vorliegenden Erfindung kann das medienführende, starre Bauteil, wenigstens jedoch dessen Rohrstutzen ein Gussteils ein, wie es insbesondere bei Abgaskrümmern oder Abgasanschlüssen von Verbrennungsmotoren eingesetzt wird. Dieses Gussteil kann aus Aluminium-Druckguss, aus Eisenguss, Stahlguss oder aus Edelstahl-Feinguss und dergleichen mehr hergestellt sein. Bei Verwendung dieser Materialien bietet die Erfindung besondere Vorteile aufgrund des Wegfalls einer Notwendigkeit, die aneinander festzulegenden Teile miteinander zu verschweißen.

Dieser zweite Aspekt der vorliegenden Erfindung ist mit dem ersten Aspekt und allen seinen Weiterbildungen im Rahmen der vorliegenden Erfindung kombinierbar.

Eine weiter bevorzugte Ausgestaltung der vorliegenden Erfindung besteht darin, einen Rohstutzen zu verwenden, der sich in ein Flammschutzrohr fortsetzt, welches sich in das flexible Leitungselement hinein erstreckt und dort mehrere Wellen überdeckt und diese so gegen insbesondere heiße durchgeleitete Gase schützt. Das Flammschutzrohr überdeckt vorzugsweise etwa die Hälfte, besonders bevorzugt etwa 2/3 und weiter besonders bevorzugt im wesentlichen alle Wellungen des flexiblen Leitungselements.

Um die im Rahmen der vorliegenden Erfindung mögliche Umformung des Anschlussendes des flexiblen Leitungselements, die zum Hintergreifen von Hinterschneidungen im Rohrstutzen führt, zu vereinfachen, kann schließlich vorgesehen sein, dass der umzuformende Bereich des Anschlussendes mit Längsschlitzen versehen ist. Insbesondere bei hakenartig nach innen ausgestalteten Umformungen zum Hintergreifen einer Hinterschneidung am Rohrstutzen bietet eine solche Längsschlitzung Vorteile, da hierdurch Umfangskräfte eliminiert werden, die einer solchen Umformung entgegenwirken würden.

Einige Ausführungsbeispiele für eine erfindungsgemäße Anordnung sind in den beiliegenden Zeichnungsfiguren dargestellt und werden im Folgenden näher beschrieben. Es zeigen:
- Figur 1 bis Figur 8: schematische seitliche Schnittdarstellungen verschiedener Ausführungsbeispiele einer erfindungsgemäßen Anordnung;
- Figuren 9a und 9b: schematische seitliche Schnittdarstellungen eines weiteren Ausführungsbeispiels während zweier verschiedener Zeitpunkte beim Durchführen des erfindungsgemäßen Verfahrens;
- Figuren 10a und 10b: schematische seitliche Schnittdarstellungen eines weiteren Ausführungsbeispiels während zweier verschiedener Zeitpunkte beim Durchführen des erfindungsgemäßen Verfahrens.

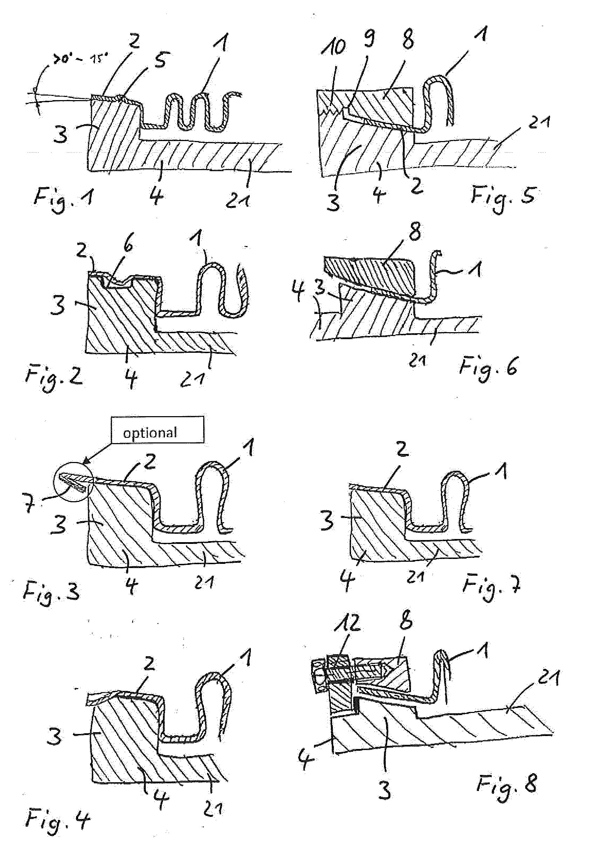

In den Figuren 1 bis 8 ist jeweils ein Ringwellschlauch 1 als flexibles Leitungselement dargestellt, der mit einem Anschlussende 2 auf einem Rohrstutzen 3 eines medienführenden starren Bauteils 4 verpresst ist. Der Rohrstutzen 3 ist hierbei jeweils im Wesentlichen einer Kegelstumpf-Mantelfläche angenähert, deren Öffnungswinkel, wie in Figur 1 angedeutet, vorzugsweise zwischen > 0° und ca. 15° liegt. Der Rohrstutzen setzt sich jeweils in ein Flammschutzrohr 21 fort, das mehrere Wellungen des Ringwellschlauchs 1 überdeckt. Ein solches Flammschutzrohr 21 bietet Vorteile, da die hier dargestellten Ausführungsbeispiele ein im Wesentlichen aus dem Ringwellschlauch 1 bestehendes Entkoppelelement für die Abgasanlage eines Verbrennungsmotors an dessen Abgaskrümmer festlegen. Dementsprechend werden sehr heiße Abgase durch den Rohrstutzten 3 des (im weiteren nicht dargestellten) Abgaskrümmers sowie stromabwärts durch den Ringwellschlauch 1 geleitet, wobei das Flammschutzrohr 21 gewährleistet, dass der Ringwellschlauch 1 vor der Temperaturbelastung geschützt wird. Das Flammschutzrohr 21 kann hierbei einstückig mit dem Rohrstutzen 3 gebildet sein und insbesondere zusammen mit diesem ein Gussteil bilden, beispielsweise aus Eisenguss, Stahlguss, Edelstahl-Feinguss oder Aluminium-Druckguss.

In Figur 7 ist die einfachste Ausführung einer erfindungsgemäßen Verbindungstechnik dargestellt: Der Rohrstutzen 3 des starren Bauteils 4 bildet einen Kegelstumpf, auf dem das Anschlussende 2 des Ringwellschlauchs 1 sitzt und auf dem dieses verpresst ist. Hier liegt also eine reine reibschlüssige Verbindung zwischen dem Ringwellschlauch 1 und dem starren Bauteil 4 vor. Durch selbsthemmende Kräfte und die beim axialen Aufschieben des Anschlussendes 2 auf den Rohrstutzen 3 erzwungene Aufweitung des Anschlussendes 2 ist die dargestellte Verbindung langzeitstabil und fluiddicht. Denn das Anschlussende 2 des Ringwellschlauchs 1 ist - durch eine axiale Relativbewegung - auf dem Rohrstutzen 3 verpresst. Eine Beaufschlagung des Ringwellschlauchs 1 mit einem erhöhten Innendruck längt den Ringwellschlauch 1 und verstärkt so die reibschlüssige Verbindung.

In den Figuren 1 bis 6 und 8 sind zusätzlich zu dieser Verpressung zwischen dem Anschlussende 2 des Ringwellschlauchs 1 und dem Rohrstutzen 3 des starren Bauteils 4 noch jeweils Maßnahmen vorgesehen, die zusätzlich zum Reibschluss eine weitere Ausziehsicherung bilden und den Ringwellschlauch 1 am starren Bauteil 4 festlegen:
Im Ausführungsbeispiel nach Figur 1 ist der Rohrstutzen 3 des starren Bauteils 4 mit einem Wulst 5 versehen, der in Projektion, vom Ringwellschlauch 1 her gesehen, eine Hinterschneidung bildet. Durch Einformen des Anschlussendes 2 in die Kontur des Rohrstutzens 3 ergibt sich ein Formschluss zwischen dem Anschlussende 2 und dem Wulst 5, was eine Ausziehsicherung auch gegen hohe wirkende Kräfte sicherstellt.
Im Ausführungsbeispiel nach Figur 2 ist die Hinterschneidung in der Mantelfläche des Rohrstutzens 3 durch eine Nut 6 gebildet, in welche das Anschlussende 2 des Ringwellschlauchs 1 eingeformt wird.

Die Figuren 3 und 4 zeigen Ausführungsbeispiele mit sich ähnelnden Maßnahmen, denn der Endbereich des Anschlussendes 2 wird in beiden Fällen radial nach innen umgeformt. Gemäß Figur 3 erfolgt dies durch eine Art Haken 7, der sich radial nach innen erstreckt und hinter dem Rohrstutzen 3 gegen dessen Rückseite einrastet. Im Ausführungsbeispiel nach Figur 4 wird der Endbereich des Anschlussendes 2 ebenfalls radial nach innen umgeformt, jedoch nicht zu einem Haken 7, sondern zum Hintergreifen eines sanft eingelassenen Hinterschnitts, in den das Anschlussende 2 eingeformt wird. Dieser Hinterschnitt ist nicht umlaufend in den Rohrstutzen 3 eingebracht, sondern es gibt mehrere, umfangsverteilte Hinterschnitte, so dass sich eine Verbindung nach Art eines Kronkorkens ergibt.

Die Figuren 5 und 6 haben gemein, dass zusätzlich zur Verpressung des Anschlussendes 2 auf dem Rohstutzen 3 ein Halteelement 8 aufgebracht ist. Dieses sorgt für eine verbesserte Verpressung zwischen dem Anschlussende 2 und dem Rohrstutzen 3, sichert das Anschlussende 2 und mit diesem den Ringwellschlauch 1 jedoch auch noch zusätzlich gegen ein unbeabsichtigtes Ausziehen. Im Ausführungsbeispiel nach Figur 5 ist hierzu vorgesehen, dass das Anschlussende 2 des Ringwellschlauchs 1 mit einer Abkantung versehen wird, die in eine entsprechende Kavität 9 eingesetzt wird und somit den Ringwellschlauch 1 formschlüssig am Rohrstutzen 3 festlegt. Im Ausführungsbeispiel nach Figur 5 ermöglicht ein Gewinde 10, das Halteelement 8 mit genügend hohen Kräften gegen das Anschlussende 2 und letztlich den Rohrstutzen 3 zu pressen.

Im Ausführungsbeispiel nach Figur 6 ist ein Halteelement 8 vorgesehen, das einen anderen Wärmeausdehnungskoeffizient besitzt wie der Rohrstutzen 3. Im vorliegenden Ausführungsbeispiel sollen heiße Abgase durch den Rohrstutzen 3 hindurchgeleitet werden, so dass dieser gegenüber der Umgebungstemperatur erwärmt wird und sich entsprechend ausdehnt. Das Material des Halteelements 8 dehnt sich nicht so stark aus, so dass das Anschlussende 2 des Ringwellschlauchs 1 mit erhöhten Verpresskräften beaufschlagt wird. Das Halteelement 8 kann beispielsweise aus einer Eisen-Nickel-Legierung mit der Werkstoffnummer 1.3912 bestehen, welches auch unter der eingetragenen Marke Invar bekannt ist. Der Rohrstutzen 3 kann beispielsweise aus den in der Abgasanlage von Verbrennungsmotoren üblichen Gussmaterialien gefertigt sein.

Ein weiteres Ausführungsbeispiel mit zusätzlichem Halteelement 8 findet sich in Figur 8: Dort dient ein Schraubenelement 12 nicht nur als Sicherung gegen mechanisches Ausziehen des Ringwellschlauchs 1 und/oder des Halteelements 8, sondern das Schraubenelement 12 verbessert darüber hinaus die Normalkraft zwischen dem Halteelement 8 und dem Rohrstutzen 3.

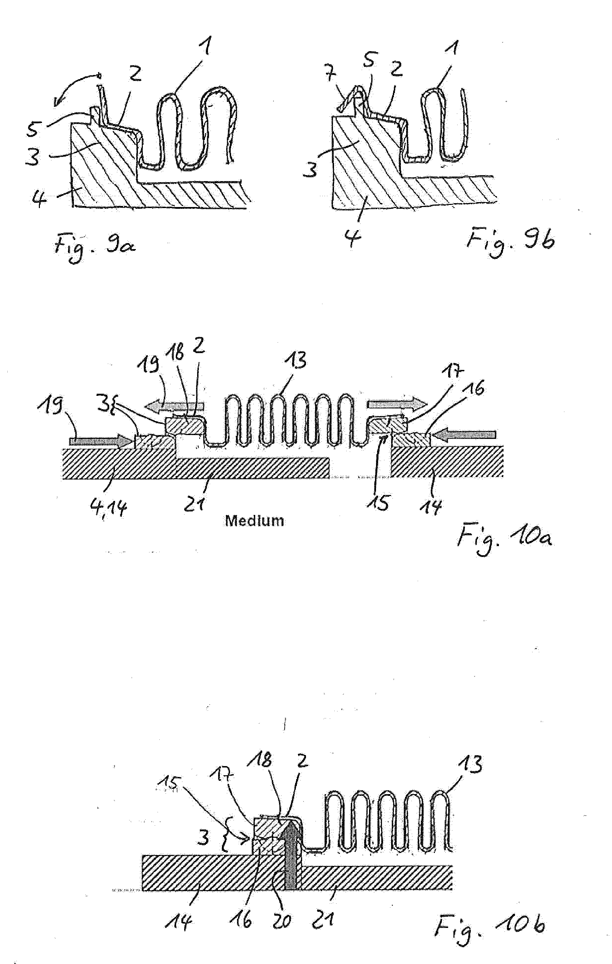

Die Figuren 9a und 9b zeigen ein Ausführungsbeispiel mit ganz ähnlicher Konfiguration wie dasjenige, das in Figur 1 dargestellt ist. Ein Ringwellschlauch 1 sitzt auf dem Rohrstutzen 3 eines starren Bauteils 4, wobei der Rohrstutzen 3 mit einem Wulst 5 versehen ist. Um diesen Wulst 5 herum wird nun, wie die Figuren 9a und 9b visualisieren sollen, ein Endbereich des Anschlussendes 2 umgeformt, so dass er die durch den Wulst 5 gebildete Hinterschneidung hintergreift.

In den Figuren 10a und 10b schließlich ist ein Ausführungsbeispiel gemäß einer besonders bevorzugten Ausgestaltung bzw. dem zweiten Aspekt der vorliegenden Erfindung dargestellt. Das flexible Leitungselement ist hier als ringgewellter Metallbalg 13 ausgebildet, der als Entkoppelelement in einer Abgasleitung eines Kraftfahrzeug-Verbrennungsmotors sitzt. Die medienführenden starren Bauteile 4, an die der Metallbalg 13 mit einem erfindungsgemäßen Verfahren angeschlossen werden soll, sind demnach Abgasrohre 14. Der Rohrstutzen 3 des starren Bauteils 4 ist hier zweigeteilt, und zwar entlang einer im wesentlichen axial verlaufenden Trennfläche 15 in einen inneren Rohrstutzenteil 16 und einen äußeren Rohrstutzenteil 17. Der innere Rohrstutzenteil 16 ist fest mit dem starren Bauteil 4 bzw. dem Abgasrohr 14 verbunden oder an dieses angeformt, während der äußere Rohrstutzenteil 17 auf den inneren Rohrstutzenteil 16 aufgeschoben und von diesem abgezogen werden kann. Um den Metallbalg 13 an die Abgasrohre 14 anzuschließen, wird der äußere Rohrstutzenteil 17 vom inneren Rohrstutzenteil 16 mittels einer axialen Relativbewegung entfernt und mit dem Anschlussende 2 des Metallbalgs 13 stoffschlüssig verbunden. Hierzu ist in den Figuren 10a und 10b eine Schweißnaht 18 angedeutet.

Danach werden, wie Figur 10a zeigt, die äußeren Rohrstutzenteile 17 zusammen mit den Anschlussenden 2 des Metallbalgs 13 auf die inneren Rohrstutzenteile 16 aufgeschoben. Hierbei müssen die Anschlussenden 2 aufgeweitet werden, so dass hohe axiale Fügekräfte, die mit Pfeilen 19 symbolisiert sind, aufgebracht werden müssen. Im Ergebnis ergibt sich eine Verpressung zwischen dem Anschlussende 2 des Metallbalgs 13, dem äußeren Rohrstutzenteil 17, dem inneren Rohrstutzenteil 16 und dem Abgasrohr 14, wie dies in Figur 10b dargestellt ist.

Wie Figur 10a verdeutlicht, weisen die beiden Rohrstutzenteile 16, 17 an der Trennfläche 15 jeweils eine makrorauhe Oberfläche auf, mit der sie sich gegeneinander verzahnen, was die Reibungskräfte und den Reibschluss an dieser Stelle erhöht. Hierbei müssen sich die Oberflächenformen des inneren Rohrstutzenteils 16 einerseits und des äußeren Rohrstutzenteils 17 andererseits nicht unbedingt so entsprechen, dass sie im fertig montierten Zustand formschlüssig ineinandergreifen.

Wie Figur 10b andeutet, hat das hier dargestellte Ausführungsbeispiel gerade für den Einsatz im Abgasstrang eines Kraftfahrzeug-Verbrennungsmotors besondere Vorteile hinsichtlich einer unerwünschten thermischen Belastung des Metallbalgs 13 durch die transportierten, heißen Abgase. Denn für den inneren und den äußeren Rohrstutzenteil 16, 17 können jeweils unterschiedliche Materialien verwendet werden, da auf eine Schweißbarkeit dieser beiden Rohrstutzenteile untereinander keine Rücksicht genommen werden muss. Dementsprechend können Materialien mit geringer Wärmeleitfähigkeit eingesetzt werden, so dass zwischen dem Abgasrohr 14 und dem Metallbalg 13 über den Rohrstutzen 3 hinweg ein hoher Temperaturgradient entsteht, der mit dem Pfeil 20 angedeutet ist. Ein an das Abgasrohr 14 angeschlossenes Flammschutzohr 21 stellt hierbei sicher, dass der Metallbalg 13 auch nicht direkt mit den heißen Abgasen in Berührung kommt und hierdurch thermisch belastet würde.

Beim Ausführungsbeispiel nach den Figuren 10a und 10b können auch solcherart unterschiedliche Materialien für einerseits den inneren Rohrstutzenteil 16 und andererseits den äußeren Rohrstutzenteil 17 verwendet werden, dass der Reibschluss zwischen diesen beiden Rohrstutzenteilen im Betrieb noch verbessert wird. Dies kann man beispielsweise dadurch erreichen, dass der innere Rohrstutzenteil 16 aus Materialien besteht, die sich unter Erwärmung signifikant ausdehnen, während der äußere Rohrstutzenteil 17 aus einer Speziallegierung, wie beispielsweise einer Eisen-Nickel-Legierung mit der Werkstoffnummer 1.3912 (bekannt beispielsweise unter der eingetragenen Marke Invar), oder mit der Werkstoffnummer 1.4301, oder aus GGG SiMo besteht. Diese Materialien für den äußeren Rohrstutzenteil 17 dehnen sich unter Wärmeeinfluss nicht oder weniger aus als der innere Rohrstutzenteil 16, so dass unter der im Betrieb eines Verbrennungsmotors typischen Wärmebelastung eine deutlich erhöhte Normalkraft zwischen den beiden reibschlüssig verbundenen Oberflächen der beiden Rohrstutzenteile 16, 17 erzeugt wird und der Reibschluss hierdurch signifikant erhöht wird.

Wie aus den Figuren 1 bis 10 unmittelbar deutlich wird, stellt die vorliegende Erfindung eine Anschlusstechnik zwischen einem flexiblen Leitungselement und einem medienführenden starren Bauteil zur Verfügung, die fluiddicht und beständig ist, die bei Bedarf jedoch jederzeit wieder gelöst bzw. zerlegt werden kann. Darüber hinaus ist der Anschluss mit einfachen Mitteln und auch bei beengten Platzverhältnissen möglich, ohne zusätzliche Bauteile mit entsprechendem Gewicht und Platzbedarf vorsehen zu müssen.

## Patentansprüche

1. Verfahren zum Anschließen eines flexiblen Leitungselements (1, 13) aus Metall an ein medienführendes, starres Bauteil (4, 14) mit einem Rohrstutzen( 3, 16, 17), auf den das flexible Leitungselement gesetzt wird, **dadurch gekennzeichnet,**
**dass** ein medienführendes, starres Bauteil (4) mit einem sich zum flexiblen Leitungselement (1) hin verjüngenden Rohrstutzen (3) verwendet wird, dessen Außendurchmesser zumindest zum Teil größer als die lichte Weite eines Anschlussendes (2) des flexiblen Leitungselements (1) ist, und dass das flexible Leitungselement (1) mit seinem Anschlussende (2) auf dem Rohrstutzen (3) verpresst wird.

2. Verfahren nach Anspruch 1 ,
**dadurch gekennzeichnet**
**dass** ein flexibles Leitungselement (1) verwendet wird, dessen Anschlussende (2) einen vom Rohrstutzen (3) des medienführenden starren Bauteils (4) verschiedenen Wärmeausdehnungskoeffizienten besitzt.

3. Verfahren nach einem der Ansprüche 1 oder 2,
**dadurch gekennzeichnet,**
**dass** ein medienführendes, starres Bauteil (4) mit einem Rohrstutzen (3) verwendet wird, dessen Außenkontur, in Projektion vom flexiblen Leitungselement (1) her gesehen, mit Hinterschneidungen (5, 6) versehen ist,
und **dass** das flexible Leitungselement (1) mit seinem Anschlussende (2) in die Außenkontur des Rohrstutzens (3) eingeformt oder so umgeformt wird, dass es die Hinterschneidung (5, 6) hintergreift.

4. Verfahren nach mindestens einem der Ansprüche 1 bis 3,
**dadurch gekennzeichnet,**
**dass** das Verpressen und/oder Einformen des Anschlussendes (2) des flexiblen Leitungselements (1) durch Magnetumformen erfolgt.

5. Verfahren nach mindestens einem der Ansprüche 1 bis 4,
**dadurch gekennzeichnet,**
**dass** ein medienführendes, starres Bauteil (4) mit einem sich zum flexiblen Leitungselement (1) hin verjüngenden Rohrstutzen (3) verwendet wird, dessen Außenfläche zumindest im Mittel eine Kegelfläche mit einem Öffnungswinkel von > 0° bis ca. 15 Winkelgraden bildet.

6. Verfahren nach mindestens einem der Ansprüche 1 bis 5,
**dadurch gekennzeichnet,**
**dass** ein zusätzliches, von außen gegen das Anschlussende (2) des flexiblen Leitungsteils (1) drückendes Halteelement (8) verwendet wird.

7. Verfahren nach mindestens einem der Ansprüche 1 bis 6,
**dadurch gekennzeichnet,**
**dass** ein medienführendes, starres Bauteil (4) verwendet wird, das ein Gussteil und insbesondere ein Teil eines Abgaskrümmers oder eines Abgasanschlusses eines Verbrennungsmotors ist.

8. Verfahren nach mindestens einem der Ansprüche 1 bis 7,
**dadurch gekennzeichnet,**
**dass** ein medienführendes, starres Bauteil (4) mit einem Rohrstutzen (3) verwendet wird, der sich in ein sich in das flexible Leitungselement (1) erstreckendes, mehrere Wellungen desselben überdeckendes Flammschutzrohr (21) fortsetzt.

9. Verfahren nach insbesondere einem der Ansprüche 1 bis 8,
**dadurch gekennzeichnet,**
**dass** ein medienführendes, starres Bauteil (14) mit einem Rohrstutzen (3) verwendet wird, der aus mindestens zwei koaxial gegeneinander bewegbaren, durch eine im Wesentlichen axial verlaufende Trennfläche (15) getrennten Rohrstutzenteilen (16, 17) besteht,
wobei das Anschlussende (2) des flexiblen Leitungsteils (1) auf das äußere Rohrstutzenteil (17) gesetzt und erst dann der äußere Rohrstutzenteil (17) zusammen mit dem flexiblen Leitungsteil (13) auf den mit dem starren Bauteil (14) fest verbundenen, inneren Rohrstutzenteil (16) aufgeschoben wird.

10. Anordnung zum Anschließen eines flexiblen Leitungselements (1, 13) aus Metall an ein medienführendes, starres Bauteil (4, 14), insbesondere zum Durchführen des Verfahrens nach mindestens einem der Ansprüche 1 bis 9, umfassend
ein medienführendes, starres Bauteil (4, 14) mit einem Rohrstutzen(3, 16, 17), auf den das flexible Leitungselement (1, 13) gesetzt wird, und
ein flexibles Leitungselement (1, 13) mit einem Anschlussende (2) zum Aufsetzen auf den Rohrstutzen (3, 16, 17) des starren Bauteils (4, 14), **dadurch gekennzeichnet,**
**dass** sich der Rohrstutzen (3) des starren Bauteils (4) zum flexiblen Leitungselement (1) hin verjüngt,
**dass** der Rohrstutzen (3) des starren Bauteils (4) einen Außendurchmesser aufweist, der zumindest zum Teil größer als die lichte Weite des Anschlussendes (2) des flexiblen Leitungselements (1) ist,
und **dass** das flexible Leitungselement (1) mit seinem Anschlussende (2) auf dem Rohrstutzen (3) verpresst ist.

11. Anordnung nach Anspruch 10,
**dadurch gekennzeichnet**
**dass** das Anschlussende (2) des flexiblen Leitungselement (1) einen vom Rohrstutzen (3) des medienführenden starren Bauteils (4) verschiedenen Wärmeausdehnungskoeffizienten besitzt.

12. Anordnung nach einem der Ansprüche 10 oder 11,
**dadurch gekennzeichnet,**
**dass** der Rohrstutzen (3) des starren Bauteils (4) eine Außenkontur aufweist, die, in Projektion vom flexiblen Leitungselement (1) her gesehen, mit Hinterschneidungen (5, 6) versehen ist, und dass das Anschlussende (2) des flexiblen Leitungselements (1) in die Außenkontur des Rohrstutzens (3) eingeformt oder so umgeformt ist, dass es die Hinterschneidung (5, 6) hintergreift.

13. Anordnung nach mindestens einem der Ansprüche 10 bis 12,
**dadurch gekennzeichnet,**
**dass** die Außenfläche des Rohrstutzens (3) des starren Bauteils (4) zumindest im Mittel eine Kegelfläche mit einem Öffnungswinkel von > 0 bis ca. 20 Winkelgraden, bevorzugt von ca. 15 bis ca. 20 Winkelgraden bildet.

14. Anordnung nach mindestens einem der Ansprüche 10 bis 13,
**dadurch gekennzeichnet,**
**dass** ein zusätzliches, von außen gegen das Anschlussende (2) des flexiblen Leitungsteils (1) drückendes Halteelement (8) vorgesehen ist.

15. Anordnung nach mindestens einem der Ansprüche 10 bis 14,
**dadurch gekennzeichnet,**
**dass** das medienführende, starre Bauteil (4) ein Gussteil und insbesondere ein Teil eines Abgaskrümmers oder eines Abgasanschlusses eines Verbrennungsmotors ist.

16. Anordnung nach mindestens einem der Ansprüche 10 bis 15,
**dadurch gekennzeichnet,**
**dass** sich der Rohrstutzen (3) des medienführenden, starren Bauteils (4) in ein sich in das flexible Leitungselement (1) erstreckendes, mehrere Wellungen desselben überdeckendes Flammschutzrohr (21) fortsetzt.

17. Anordnung nach insbesondere einem der Ansprüche 10 bis 16,
**dadurch gekennzeichnet,**
**dass** der Rohrstutzen (3) des starren Bauteils (14) aus mindestens zwei koaxial gegeneinander bewegbaren, durch eine im Wesentlichen axial verlaufende Trennfläche (15) getrennten Rohrstutzenteilen (16, 17) besteht,
wobei das Anschlussende (2) des flexiblen Leitungsteils (13) auf den äußeren Rohrstutzenteil (17) setzbar und zusammen mit diesem auf den mit dem starren Bauteil (14) fest verbundenen, inneren Rohrstutzenteil (16) aufschiebbar ist.

18. Anordnung nach Anspruch 17,
**dadurch gekennzeichnet,**
**dass** die beiden koaxial gegeneinander bewegbaren Rohrstutzenteile (16, 17) zur Trennfläche (15) hin mit einer makrorauhen Oberfläche versehen sind.
